# EUROPEAN PATENT APPLICATION

(11) **EP 3 434 706 A1**
(43) Date of publication of application: **30.01.2019**
(21) Application number: 17769908.9
(22) Date of filing: 08.03.2017
(51) Int. Cl.: C08G 18/00, C08G 18/40, C08G 18/62, C08G 18/64, C08G 101/00

(54) **POLYURETHANE FOAM, AND POLYOL COMPOSITION FOR PRODUCTION OF POLYURETHANE**

(30) Priority: 25.03.2016 JP 2016062312
(71) Applicant: Bridgestone Corporation, Tokyo 104-8340 (JP)
(72) Inventor: NISHIKITA Naoko, Tokyo 104-8340 (JP); SEGUCHI Hideharu, Tokyo 104-8340 (JP)
(74) Representative: Lang, Johannes
(86) International application number: PCT/JP2017/009117
(87) International publication number: WO 2017/163863

(57) **Abstract**

The present invention provides a polyurethane foam containing an amine polymer. In addition, the present invention provides a polyol composition for production of a polyurethane containing a polyol and an amine polymer. The amine polymer is preferably at least one selected from the group consisting of a polyvinylamine, a polyvinylalkylamine, a polyalkyleneimine, a polyaniline and salts thereof.

## Description

### [Technical Field]

The present invention relates to a polyurethane foam and a polyol composition for production of a polyurethane. Priority is claimed on Japanese Patent Application No. 2016-62312, filed March 25, 2016, the content of which is incorporated herein by reference.

### [Background Art]

In recent years, since aldehydes such as formaldehyde (volatile organic compounds (VOC)) may cause sick house syndrome and the like, it has been required to avoid spreading of such compounds in the field of housing as much as possible. The same applies to interiors of vehicles such as automobiles and measures against VOC are necessary.

For example, a soft urethane foam having an excellent cushioning property is used for a seat pad of a vehicle seat. However, since formaldehydes, acetaldehydes and the like contained in a polyurethane foaming material after such a urethane foam is molded or generated during a urethanization reaction diffuse from the pad, it is necessary to reduce the generation of such aldehydes.

As a technique for reducing the generation of aldehydes, in the related art, a deodorizing resin composition in which a hydrazide compound is added to a polyurethane (refer to Patent Document 1), and a method of mixing a hydrazine compound with a polyol compound (refer to Patent Document 2) are known.

### [Citation List]

### [Patent Document]

[Patent Document 1]
   Japanese Unexamined Patent Application, First Publication No. H10-36681
[Patent Document 2]
   Japanese Unexamined Patent Application, First Publication No. 2006-182825

### [Summary of Invention]

### [Technical Problem]

However, in recent years, the demand for reducing VOC such as aldehydes has increased more and more and a further reduction in aldehydes is required.

An object of the present invention is to provide a polyurethane foam having an excellent effect of reducing aldehydes and a polyol composition used for producing such a polyurethane foam.

### [Solution to Problem]

[1] A polyurethane foam containing an amine polymer having an amino group in its repeating unit.
[2] The polyurethane foam according to [1], wherein the amine polymer is at least one selected from the group consisting of a polyvinylamine, a polyvinylalkylamine, a polyalkyleneimine, a polyaniline and salts thereof.
[3] The polyurethane foam according to [2], wherein the amine polymer is a polyethyleneimine.
   Here, the polyethyleneimine used in the present invention refers to a polymer having a polyethyleneimine framework and a structure thereof and a ratio of primary to tertiary amines are not particularly limited.
[4] The polyurethane foam according to any one of [1] to [3], wherein the polyurethane foam is a seat pad.
[5] A polyol composition for production of a polyurethane containing a polyol and an amine polymer having an amino group in its repeating unit.
[6] The polyol composition for production of a polyurethane according to [5], wherein 0.01 to 5.0 parts by mass of the amine polymer is contained with respect to 100 parts by mass of the polyol.
[7] The polyol composition for production of a polyurethane according to [6], wherein the amine polymer is at least one selected from the group consisting of a polyvinylamine, a polyvinylalkylamine, a polyalkyleneimine, a polyaniline and salts thereof.
[8] The polyol composition for production of a polyurethane according to [7], wherein the amine polymer is a polyethyleneimine.

### [Advantageous Effects of Invention]

In the polyurethane foam of the present invention, since an amine polymer effectively reduces the generation of aldehydes, when the polyurethane foam is used for a seat pad or the like, it is possible to greatly reduce the generation of aldehydes.

### [Description of Embodiments]

Exemplary embodiments of the present invention will be described below, but the present invention is not limited to these embodiments.

### <<Polyurethane foam>>

A polyurethane foam of the present invention contains an amine polymer having an amino group in its repeating unit.

The form of the polyurethane foam of the present invention is not particularly limited, but a flexible polyurethane foam or a semi-rigid polyurethane foam is preferable, and a flexible polyurethane foam is particularly preferable. The flexible polyurethane foam will be described below.

The flexible polyurethane foam is obtained by foam molding a polyol composition containing a polyol, an amine polymer, a foaming agent, and a catalyst, and a polyisocyanate. As a method of foam molding thereof, for example, a one shot method, a prepolymer method, or a mechanical froth method can be used.

The method of foam molding a polyurethane foam may be any of a slab method in which a mixture of a polyol composition and a polyisocyanate is discharged to a traveling conveyor belt, foaming is performed while the mixture moves on the conveyor belt, and thereby a continuous polyurethane foam slab is obtained, a mold method in which the mixture is discharged into a mold, and foaming is performed in the mold, and a mechanical froth method in which bubbles are mixed in by mechanical stirring.

### <Polyol composition>

### (Polyol)

In consideration of molding properties and mechanical properties of a urethane foam, a polyol component contained in the polyol composition contains a polyether polyol (hereinafter referred to as a "polyether polyol A") having an average number of functional groups of 2 to 8, a hydroxyl value of 14 to 60 (mg KOH/g), and an amount of an oxyethylene unit of 0 to 30 weight%.

The average number of functional groups of the polyether polyol A is 2 to 8, and is preferably 2 to 6 and is more preferably 2 to 5 in consideration of molding properties and mechanical properties of a urethane foam.

In consideration of curing properties and mechanical properties of a urethane foam, the hydroxyl value of the polyether polyol A is 14 to 60 (mg KOH/g), preferably 17 to 50 (mg KOH/g), and more preferably 20 to 45 (mg KOH/g).

The hydroxyl value in the present invention is measured by a method specified in Japanese Industrial Standards JIS K1557-1.

In consideration of molding properties and mechanical properties of a urethane foam, the amount of the oxyethylene unit of the polyether polyol A is 0 to 30 weight%, preferably 5 to 25 weight%, and more preferably 5 to 20 weight%.

The polyether polyol contained in the polyether composition may be of one type or two or more types.

As the polyether polyol A, a compound having a structure in which an alkylene oxide (hereinafter abbreviated as AO) is added to a compound having at least two (preferably 2 to 8) active hydrogen atoms (polyhydric alcohols, polyhydric phenols, amines, polycarboxylic acids, phosphoric acids, and the like) may be exemplified. This may be of any type as long as it is generally used to produce a polyurethane foam and among these, polyhydric alcohols are preferable in consideration of curing properties and mechanical properties of a urethane foam.

As an AO added to an active hydrogen-containing compound, an AO composed of a 1,2-AO having 3 or more carbon atoms and an ethylene oxide (hereinafter abbreviated as EO) is preferable. Examples of a 1,2-AO having 3 or more carbon atoms include 1,2-propylene oxide (hereinafter abbreviated as PO), 1,2-butylene oxide and styrene oxide. Among these, PO is preferable in consideration of productivity.

An AO composed of only a 1,2-AO having 3 or more carbon atoms and EO is preferable, but an adduct in which another AO is used in combination within a range of 10 weight% or less (more preferably 5 weight% or less) in the AO may be used. As another AO, those having 4 to 8 carbon atoms are preferable, and 1,3-, 1,4- and 2,3-butylene oxide and the like may be exemplified, and two or more types thereof may be used.

As a method of adding an AO, either a block addition method or a random addition method may be used, but a method in which at least an active hydrogen terminus of a polyol is block added to is preferable.

In the present invention, in the polyol component, in addition to the polyol, other polyols or active hydrogen components may be contained, and examples thereof include other polyether polyols, polyester polyols, and polyhydric alcohols, other polyols and monools, and polymer polyols obtained by polymerizing a vinyl monomer in such a polyol, amines, and mixtures thereof. This may be of any type as long as it is generally used to produce a polyurethane foam.

In addition, the polyol composition may further contain a polyol that functions as a communicating agent that allows communication between bubbles of a flexible polyurethane foam. This may be of any type as long as it is generally used to produce a polyurethane foam.

### (Amine polymer)

In the present invention, the amine polymer functions as an aldehyde scavenger.

The amine polymer is preferably at least one selected from the group consisting of a polyvinylamine, a polyvinylalkylamine (polyallylamine, etc.), a polyalkyleneimine, a polyaniline and salts thereof, and in consideration of an effect of reducing generation of aldehydes, a polyethyleneimine is particularly preferable.

The polyethyleneimine applied in the present invention may not be a perfect linear polymer, and may be a polyethyleneimine which has a branching structure containing a primary amino group, a secondary amino group, or a tertiary amino group in a molecular framework and in which a proportion of primary amino groups is 20 mol% or more with respect to all amino groups. When characteristics thereof are within the above range, it is possible to improve the effect of reducing generation of aldehydes.

In consideration of stirring properties, the viscosity of the polyethyleneimine is preferably 40,000 (mPa·s-25°C) or less, more preferably 20,000 or less, and most preferably 15,000 or less.

The amine polymer is preferably a polymer containing at least one selected from the group consisting of a primary amine and a secondary amine in its repeating unit, and more preferably a polymer containing both a primary amine and a secondary amine. In addition, the amine polymer may contain a tertiary amine. In the amine polymer, the ratio (molar ratio) of primary amine:secondary amine:tertiary amine is preferably 20 to 60:20 to 60:10 to 50.

The amount of the amine polymer is preferably 0.01 to 5.0 parts by mass, more preferably 0.01 to 3.0 parts by mass, and most preferably 0.01 to 1.0 parts by mass with respect to 100 parts by mass of the polyol. When the amount of the amine polymer is too small, an effect of reducing generation of aldehydes is not obtained. On the other hand, when the amount of the amine polymer is too large, the influence on a urethanization reaction becomes excessive and it may be difficult to obtain a polyurethane foam having the desired properties.

Here, generally, the amine polymer that is contained in a polyol composition for production of a polyurethane to be described below is used.

### (Foaming agent)

As the foaming agent contained in the polyol composition, water is preferably used. Since water reacts with a polyisocyanate and carbon dioxide gas is generated, it functions as a foaming agent.

The amount of water in the polyol composition is preferably 1 to 7 parts by mass, and more preferably 2 to 5 parts by mass with respect to 100 parts by mass of the polyol. Within the above range, a flexible polyurethane foam having desired physical properties is easily obtained. In addition, it is possible to prevent thermal compression residual strain properties of the obtained flexible polyurethane foam from deteriorating.

### (Catalyst)

As the catalyst contained in the polyol composition, a known catalyst used in the field of polyurethane foams may be used. Examples of known catalysts include an amine catalyst and a tin catalyst.

In general, known catalysts are roughly classified into gelling catalysts and blowing catalysts.

Gelling catalysts accelerate the synthesis of polyurethane by a reaction between the polyol and the polyisocyanate. A catalyst with the ratio of a blowing catalyst constant to a gelling catalyst constant (blowing catalyst constant/gelling catalyst constant) of 1 or less is called a gelling catalyst.

The blowing catalyst accelerates foaming of the polyurethane rather than gelling. A catalyst with a ratio of a blowing catalyst constant to a gelling catalyst constant of greater than 1 is called a blowing catalyst.

Here, the gelling catalyst constant is a constant used for determining a rate of a gelling reaction between polyols and polyisocyanates, and as a value thereof increases, a crosslinking density of a foamed product increases. Specifically, a reaction constant of a gelation reaction between tolylene diisocyanate and diethylene glycol is used. On the other hand, the blowing catalyst constant is a constant used for determining a rate of a blowing reaction between polyisocyanates and water, and as a value thereof increases, communication between cells of a foamed product is improved. Specifically, a reaction constant of a blowing reaction between tolylene diisocyanate and water is used.

The gelling catalyst constant and the blowing catalyst constant are determined by a known method.

In the present invention, a catalyst containing both a gelling catalyst and a blowing catalyst is preferably used. When such a catalyst is used, it is possible to improve the mechanical strength of the flexible polyurethane foam.

Examples of the gelling catalyst include tertiary amines such as triethylenediamine (TEDA), triethylenediamine, N,N,N',N'-tetramethylethylenediamine, N,N,N',N' -tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, and 135-tris(N,N-dimethylaminopropyl)hexahydro-S-triazine; imidazoles such as 1-methylimidazole, 1,2-dimethylimidazole, and 1-isobutyl-2-methylimidazo le; N,N,N',N'-tetramethylhexamethylenediamine, N-methyl-N' -(2-dimethylaminoethyl)piperazine, N,N'-dimethylpiperazine, N-methylpiperazine, N-methylmorpholine, and N-ethylmorpho line; and 1,8-diazabicyclo[5.4.0]undecene-7,1,1'-(3-(dimethylamino)propyl)imino)bis(2-propanol)

Examples of the blowing catalyst include bis(2-dimethylaminoethyl)ether, N,N,N',N",N"-pentamethyldiethylenetriamine, and N,N,N',N",N"',N"'-hexamethyltriethylenetetramine.

Moreover, for the gelling catalyst, in addition to the above amine catalyst, as the tin catalyst, known organotin catalysts, for example, stannous octoate, stannous laurate, dibutyltin dilaurate, dibutyltin dimaleate, dibutyltin diacetate, dioctyltin diacetate, and tin octylate, may be used. Both of the gelling catalyst and the blowing catalyst may be used in the form of a solution obtained by dilution with a known solvent such as dipropylene glycol and polypropylene glycol.

The amount of the amine catalyst in the polyol composition is preferably 0.1 to 5.0 parts by mass, more preferably 0.2 to 3.0 parts by mass, and most preferably 0.3 to 2.0 parts by mass with respect to 100 parts by mass of the polyol.

The amount of the tin catalyst in the polyol composition is preferably 0.001 to 1 parts by mass with respect to 100 parts by mass of the polyol.

### (Foam stabilizer)

A foam stabilizer may be contained in the polyol composition. As an exemplary example of the foam stabilizer, a known foam stabilizer that is used in the field of polyurethane foams can be used, and a silicone foam stabilizer and the like may be used.

The amount of the foam stabilizer in the polyol composition is preferably 0.1 to 5 parts by mass, more preferably 0.2 to 3 parts by mass, and most preferably 0.3 to 2.5 parts by mass with respect to 100 parts by mass of the polyol.

### (Other optional components)

Various additives can be added to the polyol composition as necessary. For example, a crosslinking agent, a coloring agent such as a pigment, a chain extender, a filler such as calcium carbonate, a flame retardant, an antioxidant, a UV absorber, a light stabilizer, a conductive substance such as carbon black, and an antimicrobial agent can be added. Amounts of various additives added are appropriately adjusted according to applications and purposes.

### <Polyisocyanate>

As an isocyanate component used in a method of producing a flexible polyurethane foam of the present invention, a component used in production of polyurethane in the related art can be used. Examples of such an isocyanate include an aromatic polyisocyanate, an aliphatic polyisocyanate, an alicyclic polyisocyanate, an aromatic and aliphatic polyisocyanate, modified products thereof (for example, modified products having a urethane group, a carbodiimide group, an allophanate group, a urea group, a biuret group, an isocyanurate group, or an oxazolidone group) and mixtures of two or more thereof.

Examples of the aromatic polyisocyanate include a C6 to 16 (excluding carbon in the NCO group; similarly applies to the following isocyanates) aromatic diisocyanate, a C6 to 20 aromatic triisocyanate and crude products of these isocyanates. Specific examples include 1,3-and/or 1,4-phenylene diisocyanate, 2,4- and/or 2,6-tolylene diisocyanate (TDI), crude TDI, 2,4'- and/or 4,4'-diphenylmethane diisocyanate (MDI), and polymethylene polyphenyl isocyanate (crude MDI).

Examples of the aliphatic polyisocyanate include a C6 to 10 aliphatic diisocyanate. Specific examples include 1,6-hexamethylene diisocyanate and lysine diisocyanate.

Examples of the alicyclic polyisocyanate include a C6 to 16 alicyclic diisocyanate. Specific examples include isophorone diisocyanate, 4,4'-dicyclohexylmethane diisocyanate, and norbornane diisocyanate. Examples of the aromatic and aliphatic polyisocyanate include a C8 to 12 aromatic and aliphatic diisocyanate. Specific examples include xylylene diisocyanate, and α,α,α',α'-tetramethylxylylene diisocyanate.

Specific examples of the modified polyisocyanate include urethane modified MDI and carbodiimide-modified MDI.

The polyol composition may be prepared by performing mixing using a known method.

Then, in a process of foam molding the flexible polyurethane foam, the polyol composition and the polyisocyanate may be mixed together.

Specific applications of the polyurethane foam of the present invention are not particularly limited. For example, when the polyurethane foam of the present invention is a flexible polyurethane foam, it can be suitably used for seat pads for automobiles and transportation vehicles, bedding such as mattresses and pillows, women's underwear such as brassieres and brassiere pads, and additionally, various molded articles such as leg covers of chairs and sofas for preventing scratches, tableware underlays, floor members, table sheets, coasters, and other miscellaneous products, and particularly, it can be suitably used for seat pads for automobiles and transportation vehicles.

### <<Polyol composition for production of a polyurethane>>

The polyol composition for production of a polyurethane of the present invention contains a polyol and an amine polymer having an amino group in its repeating unit. More preferably, the polyol composition for production of a polyurethane is a mixture containing the remaining materials except for the polyisocyanate within materials of the foaming stock solution as constituent components. Constituent components and amounts thereof are the same as described above in relation to the foaming stock solution.

### [Examples]

The present invention will be described below in more detail with reference to examples. However, the present invention is not limited to the following examples.

### [Reference Example 1] (control)

According to a formulation shown in Table 1, a mixed solution containing components other than a polyisocyanate (polyol composition for production of a polyurethane) and a polyisocyanate were mixed together to prepare a foaming stock solution. (In the tables, units of amounts of materials are parts by mass unless otherwise specified). In this case, a liquid temperature of the polyurethane foaming stock solution was 25°C. Next, immediately after the stock solution was prepared, this was foamed and·cured in a mold whose temperature was set to 60°C, the mold was released, and a polyurethane foam for a seat pad was obtained. The foaming stock solution was injected into a mold and foam-molded to produce a seat pad. Performances of the obtained seat pads were evaluated by the following measurement methods. The results are shown in Table 2.

**[Table 1]**

| Formulation | Mixing proportion (parts by mass) |
|---|---|
| Polyether polyol | 70 |
| Polymer polyol | 30 |
| Additive | Based on the following Table 2 |
| Gelling catalyst | 0.4 |
| Blowing catalyst | 0.1 |
| Foam stabilizer | 1.0 |
| Water | 3.8 |
| Polyisocyanate | 45 |

Details of the materials in Table 1 are as follows.
Polyether polyol: a polyether polyol having a hydroxyl value of 34 which is the above polyether polyol A (SANNIX FA703 commercially available from Sanyo Chemical Industries, Ltd.)
Polymer polyol: polymer polyol having a hydroxyl value of 23 (SANNIX KC855 commercially available from Sanyo Chemical Industries, Ltd.)
Gelling catalyst: a mixture of triethylenediamine (TEDA) (33 mass%) and dipropylene glycol (DPG) (67 mass%) (TEDA-L33 commercially available from Tosoh Corporation)
Blowing catalyst: a mixture of bis(2-dimethylaminoethyl)ether (BDMAEE) (70 mass%) and dipropylene glycol (DPG) (30 mass%) (TOYOCAT-ET commercially available from Tosoh Corporation)
Foam stabilizer: silicone foam stabilizer (Niax silicone L3627 commercially available from Momentive Performance Materials Inc.)
Polyisocyanate: a mixture of TDI (80 mass%) and MDI (20 mass%), NCO=44.8% (Cosmonate TM20 commercially available from Mitsui Chemicals & SKC Polyurethanes Inc.)

### [Examples 1 to 15 and Comparative Examples 1 to 4]

Polyurethane foams for a seat pad were obtained in the same manner as in Reference Example 1 except that additives shown in Table 2 were added to polyol compositions for production of a polyurethane. Performances of the obtained seat pads were evaluated by the following measurement methods. The results are shown in Table 2.

**[Table 2]**

| | Additive | Type | Amount added | Foam density | Amount of aldehyde emitted | |
|---|---|---|---|---|---|---|
| | | | (Parts by weight) | (kg/m³) | FA (µg/pieces) | AA (µg/pieces) |
| Reference Example 1 | None | | | 45 | 0.3 | 1.2 |
| Example 1 | Polyethyleneimine A | Liquid | 0.01 | 45 | 0.1 | 1 |
| Example 2 | Polyethyleneimine A | Liquid | 0.05 | 45 | 0.1 | 1 |
| Example 3 | Polyethyleneimine A | Liquid | 0.1 | 45 | 0.1 | 0.9 |
| Example 4 | Polyethyleneimine A | Liquid | 0.5 | 45 | n.d. | 0.7 |
| Example 5 | Polyethyleneimine A | Liquid | 1 | 45 | n.d. | 0.2 |
| Example 6 | Polyethyleneimine B | Liquid | 0.01 | 45 | 0.1 | 1 |
| Example 7 | Polyethyleneimine B | Liquid | 0.05 | 45 | 0.1 | 1 |
| Example 8 | Polyethyleneimine B | Liquid | 0.1 | 45 | 0.1 | 1 |
| Example 9 | Polyethyleneimine B | Liquid | 0.5 | 45 | n.d. | 0.7 |
| Example 10 | Polyethyleneimine B | Liquid | 1 | 45 | n.d. | 0.2 |
| Example 11 | Polyallylamine | Liquid (aqueous so lution) | 0.01 | 45 | 0.1 | 1.2 |
| Example 12 | Polyallylamine | Liquid (aqueous solution) | 0.05 | 45 | 0.1 | 1.2 |
| Example 13 | Polyallylamine | Liquid (aqueous solution) | 0.1 (resin content) | 45 | n.d. | 1.2 |
| Example 14 | Polyallylamine | Liquid (aqueous solution) | 0.5 (resin content) | 45 | n.d. | 1.2 |
| Example 15 | Polyallylamine | Liquid (aqueous solution) | 1.0 (resin content) | 45 | n.d. | 1.2 |
| Comparative Example 1 | Adipic acid dihydrazide | Solid | 0.05 | 45 | 0.3 | 1.2 |
| Comparative Example 2 | Adipic acid dihydrazide | Solid | 0.1 | 45 | 0.2 | 1.2 |
| Comparative Example 3 | Adipic acid dihydrazide | Solid | 0.5 | 45 | 0.2 | 1.1 |
| Comparative Example 4 | Adipic acid dihydrazide | Solid | 1 | 45 | 0.1 | 1.1 |

| | | | | | | |
|---|---|---|---|---|---|---|
| Note: "n.d." means that the amount was less than a detection limit (0.03 µg/pieces) of a measurement device | | | | | | |

Details of the additives in Table 2 are as follows.
Polyethyleneimine A: "Epomin 003" commercially available from Nippon Shokubai Co., Ltd. (resin content: 98 mass% or more, number average molecular weight: 300, [primary amine:secondary amine:tertiary amine] molar ratio=45:35:20)
Polyethyleneimine B: "Epomin 018" commercially available from Nippon Shokubai Co., Ltd. (resin content: 98 mass% or more, number average molecular weight: 1,800, [primary amine:secondary amine:tertiary amine] molar ratio=35:35:30)
Polyallylamine: "PAA-03" commercially available from Nittobo Medical Co., Ltd. (aqueous solution having a concentration of 20 mass%, number average molecular weight: 3,000, [primary amine:secondary amine:tertiary amine] molar ratio=100:0:0)

### <Method of measuring foam density>

Test pieces with a length of 10 cm, a width of 10 cm and a thickness of 7 cm were used, and a volume and a mass were measured using a method according to Japanese Industrial Standards JIS K6400, and a foam density was calculated, (number of samples: n=2)).

### <Measurement of amounts of formaldehyde and acetaldehyde generated>

Test pieces with a length of 10 cm, a width of 10 cm, and a thickness of 7 cm were used, and amounts of formaldehyde and acetaldehyde generated were measured using a method according to JASO M902:2007.

### <Evaluation results>

In Examples 1 to 10 in which a polyethyleneimine containing both a primary amine and a secondary amine was used as an amine polymer (additive), the generation of both formaldehyde and acetaldehyde was greatly reduced compared to Reference Example 1 (control) in which no aldehyde scavenger was used.

In addition, in Examples 11 to 15 in which a polyallylamine containing only a primary amine was used, the generation of formaldehyde was greatly reduced while the generation of acetaldehyde was not reduced.

On the other hand, in Comparative Examples 1 to 4 in which adipic acid dihydrazide was used, a sufficient aldehyde reduction effect was not obtained.

Components, combinations, and the like in the embodiments described above are only examples, and additions, omissions, substitutions, and other modifications of the components can be made without departing from the scope of the present invention.

### [Industrial Applicability]

The polyurethane foam according to the present invention can be widely used for seat pads of vehicles and the like. According to the present invention, it is possible to provide a polyurethane foam having an excellent effect of reducing aldehydes as VOC, and a polyol composition that is suitably used for production of such a polyurethane foam.

## Claims

1. A polyurethane foam containing an amine polymer having an amino group in its repeating unit.

2. The polyurethane foam according to claim 1,
wherein the amine polymer is at least one selected from the group consisting of a polyvinylamine, a polyvinylalkylamine, a polyalkyleneimine, a polyaniline and salts thereof.

3. The polyurethane foam according to claim 2,
wherein the amine polymer is a polyethyleneimine.

4. The polyurethane foam according to any one of claims 1 to 3,
wherein the polyurethane foam is a seat pad.

5. A polyol composition for production of a polyurethane containing a polyol and an amine polymer having an amino group in its repeating unit.

6. The polyol composition for production of a polyurethane according to claim 5,
wherein 0.01 to 5.0 parts by mass of the amine polymer is contained with respect to 100 parts by mass of the polyol.

7. The polyol composition for production of a polyurethane according to claim 6,
wherein the amine polymer is at least one selected from the group consisting of a polyvinylamine, a polyvinylalkylamine, a polyalkyleneimine, a polyaniline and salts thereof.

8. The polyol composition for production of a polyurethane according to claim 7,
wherein the amine polymer is a polyethyleneimine.
